# EUROPEAN PATENT APPLICATION

(11) **EP 3 826 398 A1**
(43) Date of publication of application: **26.05.2021**
(21) Application number: 19838600.5
(22) Date of filing: 04.07.2019
(51) Int. Cl.: H04W 72/04, H04L 5/00

(54) **SIGNAL PROCESSING METHOD AND DEVICE**

(30) Priority: 16.07.2018 CN 201810779367
(71) Applicant: Vivo Mobile Communication Co., Ltd., Dongguan, Guangdong 523860 (CN)
(72) Inventor: JIANG, Lei, Dongguan, Guangdong 523860 (CN); PAN, Xueming, Dongguan, Guangdong 523860 (CN); LU, Zhi, Dongguan, Guangdong 523860 (CN)
(74) Representative: Lavoix
(86) International application number: PCT/CN2019/094687
(87) International publication number: WO 2020/015537

(57) **Abstract**

Embodiments of the present disclosure provide a signal processing method and a signal processing device. The signal processing method includes: monitoring a PDCCH on one or more first DL BWPs in an unlicensed band; and acquiring DL BWP-related information or UL BWP-related information from the PDCCH.

## Description

### CROSS-REFERENCE TO RELATED APPLICATION

The present application claims a priority of the Chinese patent application No.201810779367.6 filed in China on July 16, 2018, which is incorporated herein by reference in its entirety.

### TECHNICAL FIELD

Embodiments of the present disclosure relate to the field of communication technology, in particular to a signal processing method and a signal processing device.

### BACKGROUND

In a 5^{th}-generation (5^{th}-Generation, 5G) communication system (also called as new radio (New Radio, NR) system), an unlicensed band may serve as a supplement to a licensed band (licensed band), so as to help an operator to expand its services. In order to keep pace with the NR deployment and maximize NR-based unlicensed access as possible, the unlicensed band may operate at bands of 5GHz, 37GHz and 60GHz. Due to a large bandwidth of the unlicensed band (80 or 100MHz), it is able to reduce implementation complexity of a base station and a terminal device (e.g., a user equipment (User Equipment, UE)). The unlicensed band is shared by various radio access technologies (Radio Access Technologies, RATs), e.g., wireless fidelity (Wireless Fidelity, WiFi), radar or long term evolution license assisted access (Long Term Evolution License Assisted Access, LTE-LAA), so in some countries or regions, the use of the unlicensed band must conform with the regulations, e.g., listen before talk (Listen Before Talk, LBT) or maximum channel occupancy time (Maximum Channel Occupancy Time, MCOT), so as to ensure that the resource is used by all devices fairly.

When information needs to be transmitted by a transmission node, and the LBT needs to be performed at first, energy detection (Energy Detection, ED) of a neighboring node is performed. When detected power is smaller than a threshold, it may be deemed that a channel is idle, and the transmission node may transmit the information. Otherwise, it may be deemed that the channel is busy, and the transmission node cannot transmit the information. The transmission node may be a base station, a terminal device, a WiFi access point (Access Point, AP), etc. After the transmission node starts to transmit the information, a channel occupancy time shall not exceed the MCOT.

In NR release 15 (Release 15, R15), a maximum channel bandwidth (channel bandwidth) for each carrier is 400MHz. However, considering a capability of the terminal device, a maximum bandwidth supported by the terminal device may be smaller than 400MHz, and the terminal device may operate on a plurality of small bandwidth parts (Bandwidth Parts, BWPs). Each BWP corresponds to one numerology, one bandwidth (Bandwidth) and one frequency location (Frequency Location). The base station may configure more than one BWP for the terminal device. The base station needs to inform the terminal device of a BWP on which the terminal device operates, i.e., activate (activate) the BWP. The activation and deactivation of the BWP may be performed through downlink control information (Downlink Control Information, DCI) signaling. Upon the receipt of an activation/deactivation instruction, the terminal device may perform the reception or transmission on a corresponding active BWP. For a time division duplexing (Time Division Duplexing, TDD) band, a downlink (DL) BWP and an uplink (UL) BWP having a same identity (Identity, ID) or index (index) form a BWP pair (pair), and the BWPs in the BWP pair have a same center carrier frequency, so as to reduce switching delay.

On the unlicensed band, the base station (next-generation NB, gNB) or the terminal device also needs to listen the channel before the transmission on the active BWP. The information may be transmitted when the channel is idle.

When the channel is listened merely with respect to the active BWP and the channel is busy, the gNB or the terminal device cannot perform the transmission. However, more than one BWP is probably configured by the base station for the terminal device, and the other non-active BWPs are probably idle, so these resources may be wasted. There is currently such a to-be-solved problem that a network device and the terminal device understand the UL BWP and the DL BWP on the unlicensed band differently.

### SUMMARY

An object of the embodiments of the present disclosure is to provide a signal processing method and a signal processing device, so as to solve the problem that the network device and the terminal device understand the UL BWP and the DL BWP on the unlicensed band differently.

In a first aspect, the present disclosure provides in some embodiments a signal processing method for a terminal device, including: monitoring a Physical downlink control channel (PDCCH) on one or more first DL BWPs in an unlicensed band; and acquiring DL BWP-related information or UL BWP-related information from the PDCCH.

In a second aspect, the present disclosure provides in some embodiments a signal processing method for a network device, including: listening a channel on one or more first DL BWPs in an unlicensed band to acquire a second channel listening result, the one or more first DL BWPs being monitored by a terminal device; when the second channel listening result indicates that the one or more first DL BWPs include DL BWPs on which a transmission channel is idle, selecting at least one DL BWP from the DL BWPs on which the transmission channel is idle as active DL BWP for the terminal device; and transmitting control information carried on a PDCCH to the terminal device on the active DL BWP.

In a third aspect, the present disclosure provides in some embodiments a signal processing method for a terminal device, including: receiving control information carried on a PDCCH for a primary cell; and acquiring second indication information from the control information carried on the PDCCH, the second indication information indicating UL BWP-related information and/or DL BWP-related information for the terminal device in one or more secondary cells.

In a fourth aspect, the present disclosure provides in some embodiments a signal processing method for a network device, including transmitting control information carried on a PDCCH for a primary cell to a terminal device, the control information carried on the PDCCH including second indication information, the second indication information indicating UL BWP-related information and/or DL BWP-related information for the terminal device in one or more secondary cells.

In a fifth aspect, the present disclosure provides in some embodiments a signal processing method for a terminal device, including receiving control information carried on a group common PDCCH from a network device, the control information carried on the group common PDCCH notifies the terminal device to perform UL BWP and/or DL BWP switching.

In a sixth aspect, the present disclosure provides in some embodiments a signal processing method for a network device, including transmitting control information carried on a group common PDCCH to a terminal device, the control information carried on the group common PDCCH notifies the terminal device to perform UL BWP and/or DL BWP switching.

In a seventh aspect, the present disclosure provides in some embodiments a terminal device, including: a first processing module configured to monitor a physical downlink control channel (PDCCH) on one or more first downlink (DL) bandwidth parts (BWPs) in an unlicensed band; and a second processing module configured to acquire DL BWP-related information or UL BWP-related information from the PDCCH.

In an eighth aspect, the present disclosure provides in some embodiments a network device, including: a fifth processing module configured to listen a channel on one or more first DL BWPs in an unlicensed band to acquire a second channel listening result, the one or more first DL BWPs being monitored by a terminal device simultaneously; a sixth processing module configured to, when the second channel listening result indicates that the one or more first DL BWPs include DL BWPs on which a transmission channel is idle, select at least one DL BWP from the DL BWPs on which the transmission channel is idle as active DL BWP for the terminal device; and a second transmission module configured to transmit control information carried on a PDCCH to the terminal device on the active DL BWP.

In a ninth aspect, the present disclosure provides in some embodiments a terminal device, including a third transmission module configured to receive control information carried on a PDCCH for a primary cell, and acquire second indication information from the control information carried on the PDCCH, the second indication information indicating UL BWP-related information and/or DL BWP-related information for the terminal device in one or more secondary cells.

In a tenth aspect, the present disclosure provides in some embodiments a network device, including a fourth transmission module configured to transmit control information carried on a PDCCH for a primary cell to a terminal device, the control information carried on the PDCCH including second indication information, the second indication information indicating UL BWP-related information and/or DL BWP-related information for the terminal device in one or more secondary cells.

In an eleventh aspect, the present disclosure provides in some embodiments a terminal device, including a fifth transmission module configured to receive control information carried on a group common PDCCH from a network device, wherein the control information carried on the group common PDCCH notifies the terminal device to perform UL BWP and/or DL BWP switching.

In a twelfth aspect, the present disclosure provides in some embodiments a network device, including a sixth transmission module configured to transmit control information carried on a group common PDCCH to a terminal device, wherein the control information carried on the group common PDCCH notifies the terminal device to perform UL BWP and/or DL BWP switching.

In a thirteenth aspect, the present disclosure provides in some embodiments a terminal device, including a processor, a memory, and a computer program stored in the memory and capable of being executed by the processor. The processor is configured to execute the computer program so as to implement the steps of the signal processing method in the first aspect, or the third aspect or the fifth aspect.

In a fourteenth aspect, the present disclosure provides in some embodiments a network device, including a processor, a memory, and a computer program stored in the memory and capable of being executed by the processor. The processor is configured to execute the computer program so as to implement the steps in the signal processing method in the second aspect, or the fourth aspect or the sixth aspect.

In a fifteenth aspect, the present disclosure provides in some embodiments a computer-readable storage medium storing therein a computer program. The computer program is executed by a processor so as to implement the steps in the signal processing method in any one of the first aspect to the sixth aspect.

According to the embodiments of the present disclosure, the terminal device may acquire the DL BWP-related information or UL BWP-related information in accordance with the monitored PDCCH, so that the terminal device and the network device may understand the UL BWP and the DL BWP on the unlicensed band in a same manner. As a result, it is able to improve the communication reliability and validity.

### BRIEF DESCRIPTION OF THE DRAWINGS

Through reading the detailed description in the following optional embodiments, the various other advantages and benefits may become apparent to a person skilled in the art. The drawings are for illustrating the optional embodiments only, but shall not be construed as limiting the present disclosure. In addition, in the drawings, same reference symbols represent same members. In these drawings:
Fig.1 is a schematic view showing architecture of a wireless communication system according to an embodiment of the present disclosure;
Fig.2 is a flow chart of a signal processing method according to an embodiment of the present disclosure;
Fig.3 is another flow chart of the signal processing method according to an embodiment of the present disclosure;
Fig.4 is yet another flow chart of the signal processing method according to an embodiment of the present disclosure;
Fig.5 is still yet another flow chart of the signal processing method according to an embodiment of the present disclosure;
Fig.6 is still yet another flow chart of the signal processing method according to an embodiment of the present disclosure;
Fig.7 is still yet another flow chart of the signal processing method according to an embodiment of the present disclosure;
Fig.8 is a schematic view showing a terminal device according to an embodiment of the present disclosure;
Fig.9 is a schematic view showing a network device according to an embodiment of the present disclosure;
Fig.10 is another schematic view showing the terminal device according to an embodiment of the present disclosure;
Fig.11 is another schematic view showing the network device according to an embodiment of the present disclosure;
Fig. 12 is yet another schematic view showing the terminal device according to an embodiment of the present disclosure;
Fig. 13 is yet another schematic view showing the network device according to an embodiment of the present disclosure;
Fig. 14 is still yet another schematic view showing the terminal device according to an embodiment of the present disclosure; and
Fig. 15 is still yet another schematic view showing the network device according to an embodiment of the present disclosure.

### DETAILED DESCRIPTION

The technical solutions in the embodiments of the present disclosure will be described clearly and completely with reference to the drawings in the embodiments of the present disclosure. Obviously, the described embodiments are part of the embodiments of the present disclosure, not all of the embodiments. Based on the embodiments in the present disclosure, all other embodiments obtained by a person skilled in the art without creative work fall within the protection scope of the present disclosure.

The term "including" in the specification and claims of this application and any variations thereof are intended to cover non-exclusive inclusions. For example, a process, method, system, product or device that includes a series of steps or units is not necessarily limited to the steps or units clearly listed. Instead, it may include other steps or units that are not clearly listed or are inherent to these processes, methods, products, or equipment. In addition, the use of "and/or" in the specification and claims means at least one of the connected objects, such as A and/or B, which means that there is only A, there is only B, or there are both A and B.

In the embodiments of the present disclosure, words such as "exemplary" or "for example" are used as examples, illustrations, or illustrations. Any embodiment or design solution described as "exemplary" or "for example" in the embodiments of the present disclosure should not be construed as being more preferable or advantageous than other embodiments or design solutions. To be precise, words such as "exemplary" or "for example" are used to present related concepts in a specific manner.

The technology described in the context shall not be limited to a long term evolution (Long Term Evolution, LTE)/LTE-advanced (LTE-Advanced, LTE-A) system, and it may also be applied to various wireless communication systems, e.g., code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), or any other system. The terms "system" and "network" may usually be replaced with each other. The CDMA system may be used to implement such radio technologies as CDMA2000 and universal terrestrial radio access (Universal Terrestrial Radio Access, UTRA). The UTRA may include wideband code division multiple access (Wideband Code Division Multiple Access, WCDMA) and the other CDMA variants. The TDMA system may be used to implement such a radio technology as global system for mobile communication (Global System for Mobile Communication, GSM). The OFDMA system may be used to implement such radio technologies as ultra mobile broadband (Ultra Mobile Broadband, UMB), evolved-UTRA (Evolution-UTRA, E-UTRA), IEEE 802.11 (Wi-Fi), IEEE 802.16 (WiMAX), IEEE 802.20, and Flash-OFDM. The UTRA and the E-UTRA are parts of a universal mobile telecommunications system (Universal Mobile Telecommunications System, UMTS). The LTE and a more advanced LTE (e.g., LTE-A) are new UMTS versions using the E-UTRA. The UTRA, E-UTRA, UMTS, LTE, LTE-A and GSM have been described in literatures from the 3^{rd}-generation partnership project (3^{rd}-Generation Partnership Project, 3GPP). The CDMA2000 and UMB have been described in literatures from the 3^{rd}-generation partnership project 2 (3GPP2). The technology described in the context may be applied to the above-mentioned systems and radio technologies, or applied to the other systems and radio technologies. However, a new radio (NR) system has been described illustratively hereinafter, and terms for the NR system have been used in most of the description, although these technologies may also be applied to the systems other than the NR system.

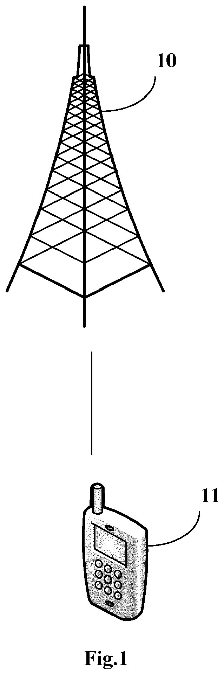

Embodiments of the present disclosure will be described hereinafter in conjunction with the drawings. A signal processing method and a signal processing device provided in the embodiments of the present disclosure may be applied to a wireless communication system. Fig.1 shows architecture of the wireless communication system according to an embodiment of the present disclosure. As shown in Fig.1, the wireless communication system may include a network device 10 and a terminal device, e.g., UE 1 which may communicate with the network device 10 (signaling or data transmission). In actual use, the devices may be connected to each other in a wireless manner. A solid line is adopted in the figure, so as to conveniently and intuitively show a connection relationship between the devices. It should be appreciated that, the communication system may include a plurality of UEs 11, and the network device 10 may communicate with the plurality of UEs 11.

The terminal device in the embodiments of the present disclosure may be mobile phone, tablet computer, notebook computer, ultra-mobile personal computer (Ultra-Mobile Personal Computer, UMPC), netbook or personal digital assistant (Personal Digital Assistant, PDA), mobile internet device (Mobile Internet Device, MID), wearable device (Wearable Device) or vehicle-mounted device.

The network device 10 in the embodiments of the present disclosure may be a base station. The base station may be a commonly-used base station, an evolved node base station (evolved node base station, eNB), a network device in a 5G system (e.g., a next generation node base station (next generation node base station, gNB) or a transmission and reception point (Transmission and Reception Point, TRP)). It should be appreciated that, in the embodiments of the present disclosure, merely the base station (gNB) in the 5G system is taken as an example, but a specific type of the base station will not be particularly defined herein.

The base station may communicate with the terminal device 11 under the control of a base station controller. In various examples, the base station controller may be a part of a core network or some base stations. Some base stations may exchange control information or user data with the core network through backhaul. In some examples, some of the base stations may directly or indirectly communicate with each other through a backhaul link, and the backhaul link may be a wired or wireless communication link. The wireless communication system may support operations on a plurality of carriers (signals of the waveform at different frequencies). A multi-carrier transmitter may transmit modulated signals on the plurality of carriers simultaneously. For example, each communication link may be a multi-carrier signal modulated using various radio technologies. Each modulated signal may be transmitted on different carriers and may carry control information (e.g., reference signal, control channel, etc.), overhead information, data, etc.

The base station may communicate with the terminal device 11 in a wireless manner via one or more access points. Each base station may provide a communication coverage at a corresponding coverage region. A coverage region for an access point may be a sector merely constituting a part of the coverage region. The wireless communication system may include various base stations (e.g., macro base station, micro base station, or pico base station). The base station may also use different radio technologies, e.g., cellular or WLAN radio access technology. The base station may be associated with same or different access network or operator deployments. The coverage regions of different base stations (including the coverage regions of the base stations of a same type or different types, the coverage regions using same or different radio technologies, or the coverage regions belonging to same or different access networks) may overlap each other.

A communication link in the wireless communication system may include an uplink for carrying uplink (Uplink UL) transmission (e.g., from the terminal device 11 to the network device 10), or a downlink for carrying downlink (Downlink, DL) transmission (e.g., from the network device 10 to the terminal device 11). The UL transmission may also be called as reverse link transmission, and the DL transmission may also be called as forward link transmission. The downlink transmission may be performed using a licensed band, an unlicensed band or both. Similarly, the uplink transmission may be performed using the licensed band, the unlicensed band or both.

Detailed description will be given hereinafter. The gNB or the terminal device may listen a plurality of BWPs, and select a BWP on which a channel is idle as an active BWP in accordance with a listening result. In this regard, the terminal device needs to monitor a physical downlink control channel (Physical Downlink Control Channel, PDCCH) and a physical downlink shared channel (Physical Downlink Shared Channel, PDSCH) on each BWP, leading to an increase in the demodulation difficulty of the terminal device. Correspondingly, the gNB also needs to monitor the transmission of the terminal device on all the configured BWPs, so as to determine the BWP for the transmission of the terminal device. Active UL BWP and active DL BWP for the terminal device are determined by the terminal device and the gNB respectively, so an inconsistent center carrier frequency may probably be caused for the active UL and DL BWPs on the unlicensed band, and thereby an additional switching delay may occur.

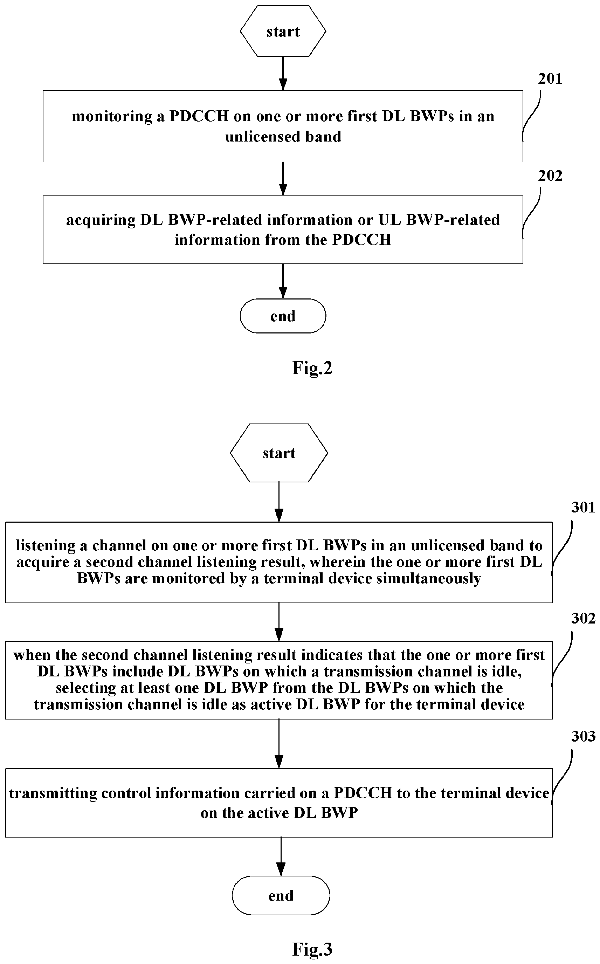

As shown in Fig.2, the present disclosure provides in some embodiments a signal processing method performed by a terminal device, which includes: Step 201 of monitoring a PDCCH on one or more first DL BWPs in an unlicensed band; and Step 202 of acquiring DL BWP-related information or UL BWP-related information from the PDCCH.

In the embodiments of the present disclosure, the DL BWP-related information or UL BWP-related information may be used to directly determine a DL BWP for receiving data or an UL BWP for transmitting data, i.e., the DL BWP-related information for receiving the data or the UL BWP-related information for transmitting the data may explicitly indicate the DL BWP for receiving the data or the UL BWP for transmitting the data. Alternatively, the DL BWP-related information for receiving the data or the UL BWP-related information for transmitting the data may be used to indirectly determine the DL BWP for receiving the data or the UL BWP for transmitting the data, i.e., the DL BWP-related information for receiving the data or the UL BWP-related information for transmitting the data may implicitly indicate the DL BWP for receiving the data or the UL BWP for transmitting the data. For example, the DL BWP for receiving the data or the UL BWP for transmitting the data may be deduced in accordance with the DL BWP-related information for receiving the data or the UL BWP-related information for transmitting the data and a mapping relationship or a specific rule.

In a possible embodiment of the present disclosure, in Step 202, the DL BWP-related information for receiving the data or the UL BWP-related information for transmitting the data may be acquired from first indication information in the PDCCH. The first indication information may explicitly or implicitly indicate the UL BWP for transmitting the data and/or the DL BWP for receiving the data, so that the terminal device may perform the transmission on the one or more BWPs in the unlicensed band, the terminal device and a network device may rapidly access the unlicensed band, and a center carrier frequency of the UL BWP for transmitting the data may be the same as that of the DL BWP for receiving the data.

In a possible embodiment of the present disclosure, the first indication information may be downlink control information (Downlink Control Information, DCI), e.g., a BWP indicator field in the DCI may be used to indicate the first indication information.

In a possible embodiment of the present disclosure, on the basis of the method in Fig.2, the method may further include: listening a channel on corresponding one or more first UL BWPs in accordance with the UL BWP-related information, to acquire a first listening result; when the first listening result indicates that the one or more first UL BWPs include UL BWPs on which a transmission channel is idle, selecting at least one UL BWP from the UL BWPs on which the transmission channel is idle as active UL BWP; and performing uplink transmission on the active UL BWP.

In the embodiments of the present disclosure, the terminal device may acquire the DL BWP-related information or the UL BWP-related information in accordance with the monitored PDCCH, so that the terminal device and the network device may understand the UL BWP and the DL BWP in a same manner. As a result, it is able to improve the communication reliability and validity.

As shown in Fig.3, the present disclosure further provides in some embodiments a signal processing method performed by a network device, which includes the following steps.

Step 301: listening a channel on one or more first DL BWPs in an unlicensed band to acquire a second channel listening result. The one or more first DL BWPs may be monitored by a terminal device, e.g., a plurality of first DL BWPs may be monitored by the terminal device simultaneously.

Step 302: when the second channel listening result indicates that the one or more first DL BWPs include DL BWPs on which a transmission channel is idle, selecting at least one DL BWP from the DL BWPs on which the transmission channel is idle as active DL BWP for the terminal device.

Step 303: transmitting control information carried on a PDCCH to the terminal device on the active DL BWP.

According to the embodiments of the present disclosure, the network device may transmit the PDCCH to the terminal device on the active DL BWP, and the terminal device may acquire the DL BWP-related information for receiving data or the UL BWP-related information for transmitting data in accordance with the monitored PDCCH, so that the terminal device and the network device may understand the UL BWP and the DL BWP in a same manner. As a result, it is able to improve the communication reliability and validity.

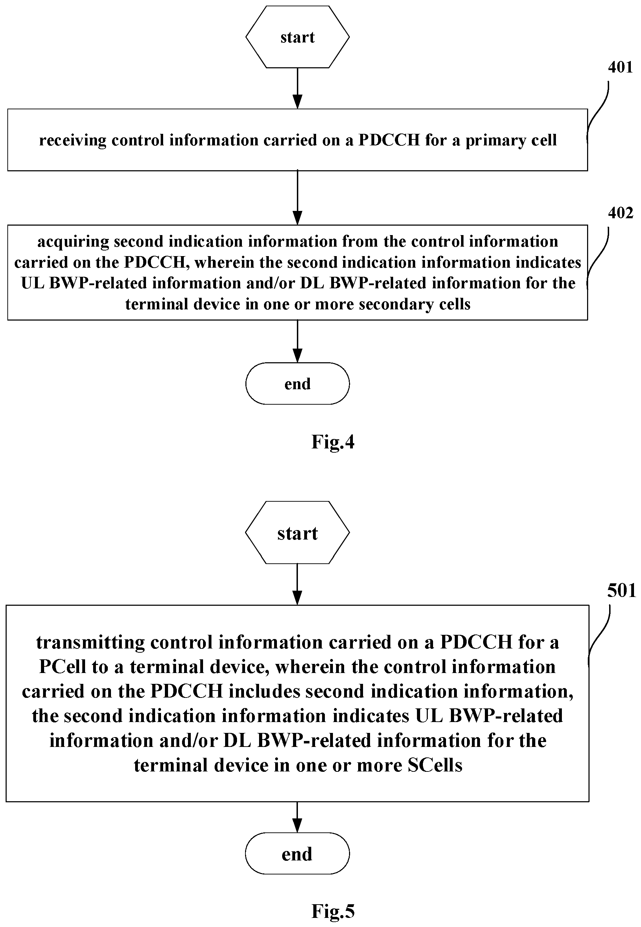

As shown in Fig.4, the present disclosure further provides in some embodiments a signal processing method performed by a terminal device, which includes: Step 401 of receiving control information carried on a PDCCH for a primary cell (Primary Cell, PCell); and Step 402 of acquiring second indication information from the control information carried on the PDCCH. The second indication information may explicitly or implicitly indicate UL BWP-related information and/or DL BWP-related information in one or more secondary cells (Secondary Cells, SCells) for the terminal device.

In the embodiments of the present disclosure, the second indication information may be DCI, e.g., a BWP indicator in the DCI may indicate the first indication information.

In the embodiments of the present disclosure, the DL BWP or UL BWP-related information may be used to directly determine a DL BWP for receiving data or an UL BWP for transmitting data, i.e., the DL BWP-related information for receiving the data or the UL BWP-related information for transmitting the data may explicitly indicate the DL BWP for receiving the data or the UL BWP for transmitting the data. Alternatively, the DL BWP-related information for receiving the data or the UL BWP-related information for transmitting the data may be used to indirectly determine the DL BWP for receiving the data or the UL BWP for transmitting the data, i.e., the DL BWP-related information for receiving the data or the UL BWP-related information for transmitting the data may implicitly indicate the DL BWP for receiving the data or the UL BWP for transmitting the data. For example, the DL BWP for receiving the data or the UL BWP for transmitting the data may be deduced in accordance with the DL BWP-related information for receiving the data or the UL BWP-related information for transmitting the data and a mapping relationship or a specific rule.

For example, the PCell may operate at a licensed band, and the SCell may operate at an unlicensed band.

It should be appreciated that, in the embodiments of the present disclosure, the terminal device may also receive control information carried on the PDCCH from a primary secondary cell (Primary Secondary Cell, PScell) or the other SCell, the control information carried on the PDCCH may include the second indication information, and the PScell and the other SCell may each operate at the licensed band.

According to the embodiments of the present disclosure, the terminal device may acquire the UL BWP-related information and/or the DL BWP-related information in an unlicensed cell in accordance with the PDCCH in a licensed cell, so that the terminal device and the network device understand the UL BWP and the DL BWP in a same manner. As a result, it is able to improve the communication reliability and validity.

As shown in Fig.5, the present disclosure further provides in some embodiments a signal processing method performed by a network device, which includes Step 501 of transmitting control information carried on a PDCCH for a PCell to a terminal device. The control information carried on the PDCCH may include second indication information, and the second indication information may explicitly or implicitly indicate UL BWP-related information and/or DL BWP-related information for the terminal device in one or more SCells.

In the embodiments of the present disclosure, the second indication information may be DCI, e.g., a BWP indicator field in the DCI may indicate the first indication information.

It should be appreciated that, the description about the UL BWP-related information and/or the DL BWP-related information in the embodiments as shown in Fig.5 may refer to the description about Step 401 in Fig.4.

For example, the PCell may operate at a licensed band, and the SCell may operate at an unlicensed band.

It should be appreciated that, in the embodiments of the present disclosure, the network device may transmit the control information carried on the PDCCH through a PScell or the other SCell, the control information carried on the PDCCH may include the second indication information, and the PScell and the other SCell may each operate at the licensed band.

In the embodiments of the present disclosure, the second indication information may be DCI, e.g., a BWP indicator in the DCI may indicate the first indication information.

According to the embodiments of the present disclosure, the network device may transmit the PDCCH for the PCell to the terminal device, and the terminal device may acquire the UL BWP-related information and/or the DL BWP-related information for the SCell in accordance with the PDCCH for the PCell, so that the terminal device and the network device understand the UL BWP and the DL BWP in a same manner. As a result, it is able to improve the communication reliability and validity.

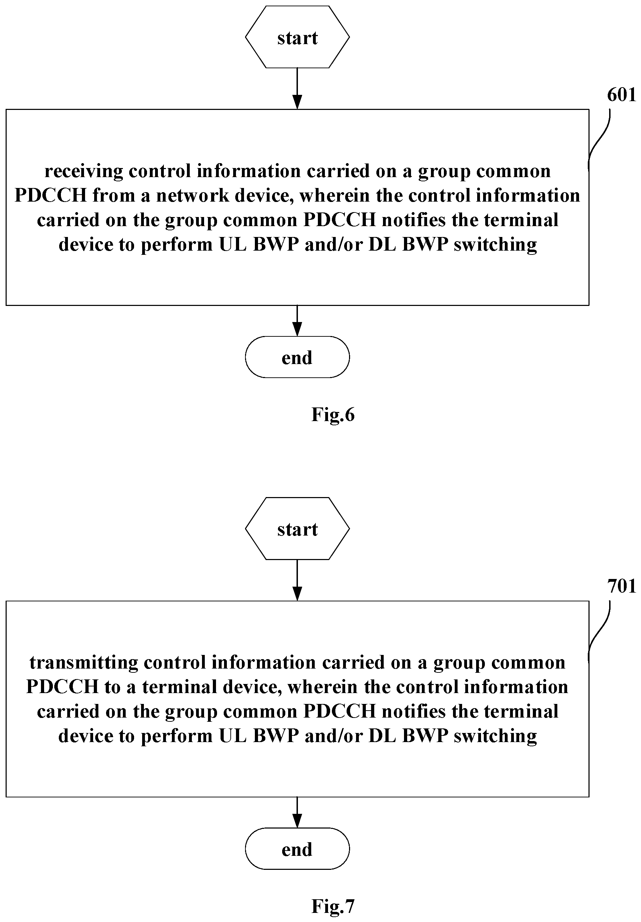

As shown in Fig.6, the present disclosure further provides in some embodiments a signal processing method performed by a terminal device, which includes Step 601 of receiving control information carried on a group common PDCCH (Group Common PDCCH, GC-PDCCH) from a network device. The control information carried on the group common PDCCH may explicitly or implicitly notify the terminal device to perform UL BWP and/or DL BWP switching.

In a possible embodiment of the present disclosure, the control information carried on the group common PDCCH may explicitly or implicitly notify the terminal device to perform the UL BWP and/or DL BWP switching in accordance with a switching rule. The switching rule may include at least one of: performing the DL BWP and/or UL BWP switching in accordance with an identity of a BWP; performing the DL BWP and/or UL BWP switching in accordance with a Received Signal Strength Indicator (RSSI) for the terminal device on a UL BWP and an RSSI for the network device on a DL BWP; and performing the DL BWP and/or UL BWP switching in accordance with a channel access rate of the terminal device on the UL BWP and a channel access rate of the network device on the DL BWP.

In a possible embodiment of the present disclosure, the switching rule may be pre-agreed by the terminal device and the network device, or predefined in a protocol.

According to the embodiments of the present disclosure, the network device may notify the terminal device to perform the UL BWP and/or DL BWP switching through the group common PDCCH, so that the terminal device and the network device understand the UL BWP and the DL BWP in a same manner. As a result, it is able to improve the communication reliability and validity.

As shown in Fig.7, the present disclosure further provides in some embodiments a signal processing method performed by a network device, which includes Step 701 of transmitting control information carried on a group common PDCCH to a terminal device. The control information carried on the group common PDCCH may explicitly or implicitly notify the terminal device to perform UL BWP and/or DL BWP switching.

In a possible embodiment of the present disclosure, the control information carried on the group common PDCCH may explicitly or implicitly notify the terminal device to perform the UL BWP and/or DL BWP switching in accordance with a switching rule. The switching rule may include at least one of: performing the DL BWP and/or UL BWP switching in accordance with an identity of a BWP; performing the DL BWP and/or UL BWP switching in accordance with an RSSI for the terminal device on a UL BWP and an RSSI for the network device on a DL BWP; and performing the DL BWP and/or UL BWP switching in accordance with a channel access rate of the terminal device on the UL BWP and a channel access rate of the network device on the DL BWP.

In a possible embodiment of the present disclosure, the switching rule may be pre-agreed by the terminal device and the network device, or predefined in a protocol.

According to the embodiments of the present disclosure, the network device may notify the terminal device to perform the UL BWP and/or DL BWP switching through the group common PDCCH, so that the terminal device and the network device understand the UL BWP and the DL BWP in a same manner. As a result, it is able to improve the communication reliability and validity.

In some embodiments of the present disclosure, when the PDCCHs on a plurality of DL BWPs are detected by the terminal device simultaneously, the terminal device may monitor the PDCCHs at PDCCH monitoring occasions on the LD BWPs at an unlicensed band. For downlink transmission, the gNB may listen a channel on all the DL BWPs which are monitored by the terminal device simultaneously. When the channel is listened to be idle, the gNB may select one or more DL BWPs on which the channel is idle for the transmission of the PDCCH, and transmit PDSCH data on one or more DL BWPs.

When the PDCCHs on a plurality of DL BWPs are detected by the terminal device simultaneously, the terminal device may merely except to receive one PDCCH (one DL grant and/or one UL grant) at a same time point. When a plurality of PDCCHs (a plurality of pieces of DL grant and/or a plurality of pieces of UL grant) has been received by the terminal device, an error case may occur.

At this time, the gNB may listen the channel on the DL BWPs which are monitored by the terminal device simultaneously. In a possible embodiment of the present disclosure, the channel is listened to be idle, the gNB may select one DL BWP for the transmission of the PDCCH, and transmit the PDSCH data on the DL BWP. The DCI may include or not include a BWP indicator for indicating a DL BWP on which the data is located. In addition, the gNB may also transmit the PDCCH on a plurality of DL BWPs. When the DCI does not include any BWP indicator, the DL BWP on which the data is transmitted may be the same as the DL BWP on which the PDCCH is transmitted, as indicated implicitly.

When the PDCCHs on a plurality of DL BWPs are detected by the terminal device simultaneously, the terminal device may expect to receive a plurality of PDCCHs (a plurality of pieces of DL grant and/or a plurality of pieces of UL grant) at a same time point.

At this time, the gNB may listen the channel on the DL BWPs which are monitored by the terminal device simultaneously. When the channel is listened to be idle, the gNB may select a plurality of DL BWPs on which the channel is idle for the transmission of the PDCCH data and the PDSCH data. The DCI may include or not include a BWP indicator for indicating a DL BWP where the data is located.

When each DL BWP is self-scheduling, i.e., when the PDCCH on each DL BWP schedules a PDSCH on a BWP where the PDCCH is located, the BWP indicator in each PDCCH may indicate an index of a BWP pair or an index of the DL BWP where the PDCCH is located. In addition in order to save signaling, the DCI may also not include any BWP indicator, i.e., the PDSCH and the PDCCH may be located on a same DL BWP, as implicitly indicated. When cross-BWP scheduling is allowed, i.e., when each DL BWP may schedule the PDSCH on the other DL BWP, the BWP indicator in each PDCCH may indicate a BWP where the data is located. The BWP indicator may indicate the index of the BWP or the index of the BWP pair.

In some embodiments of the present disclosure, for uplink transmission, the gNB may listen the channel on all the DL BWPs which are monitored by the terminal device simultaneously. When the channel is listened to be idle, the gNB may select one or more DL BWPs on which the channel is idle for the transmission of the PDCCH (UL grant), and notify the terminal device to transmit the PUSCH data on one or more UL BWPs.

The terminal device may monitor the PDCCH on a plurality of DL BWPs, and acquire information about a UL BWP for the transmission of uplink data in the UL grant in accordance with the monitored PDCCH. The terminal device may perform LBT on a corresponding UL BWP, and when the channel is detected to be idle, transmit the uplink data in accordance with the UL grant in the PDCCH.

For example, the terminal device may monitor a corresponding PDCCH on a DL BWP 1 and a DL BWP 2 simultaneously, and the PDCCH has been detected on the DL BWP1. The PDCCH may notify the UE to perform the uplink transmission on a UL BWP 1. The terminal device may perform the LBT on the UL BWP 1. When the UL BWP 1 is listened to be idle, the terminal device may transmit the uplink data on the UL BWP 1. When the gNB fails to receive any data for a long time period, it may notify, in the PDCCH, the terminal device to transmit the data on a new UL BWP, i.e., to perform BWP switching.

When the PDCCHs have been detected by the UE on the DL BWP 1 and the DL BWP 2 respectively, i.e., two pieces of UL grant have been received, the terminal device may listen the respective channel on the corresponding UL BWP in accordance with the information in each of the two pieces of UL grant. When the channel is listened to be idle, the terminal device may perform the respective transmission on the corresponding UL BWP in accordance with indication in the UL grant.

In some embodiments of the present disclosure, when the terminal device may perform the reception or transmission on merely one active BWP, the gNB and the terminal device may switch the BWP together. For the licensed-assisted transmission, the BWP-related information on an unlicensed cell (unlicensed cell) may be indicated to the terminal device on a licensed cell (licensed cell).

For example, the BWP-related information on a secondary cell (Secondary Cell, SCell) may be indicated to the terminal device on a primary cell (Primary Cell, PCell); or the BWP-related information on the SCell may be indicated to the terminal device on a PScell, the PScell may operate at a licensed band, and the SCell may operate at an unlicensed band; or the BWP-related information on a first SCell may be indicated to the terminal device on a second SCell (the other SCell), the second SCell may operate at the licensed band and the first SCell may operate at the unlicensed band.

For example, a new BWP indicator may be added in the PDCCH to indicate the BWP-related information on one or more SCells at the unlicensed band. The terminal device may perform the reception or transmission on a corresponding unlicensed BWP in accordance with the BWP indicator.

In addition, when the channel access rate is low, i.e., when the channel listened by the gNB is always busy or the gNB fails to receive the transmission from terminal device for a long time period, the gNB may notify, through the group common PDCCH (Group Common PDCCH, GC-PDCCH), the terminal device to perform the BWP switching. One field may be added in the GC-PDCCH to indicate that the terminal device needs to perform the BWP switching. The gNB and the terminal device may switch the BWPs sequentially in accordance with the BWP index or another rule. For example, the gNB may broadcast a channel access rate of the gNB per BWP RSSI or per BWP on the unlicensed cell. The terminal device may report a channel access rate of the terminal device per BWP RSSI or per BWP on the unlicensed cell. The gNB and the terminal device may select a plurality of BWPs for the terminal device whose RSSI is smaller than a certain threshold, and then select a BWP for the gNB whose RSSI is smallest from these BWPs for the transmission. Identically, it may select a plurality of BWPs for the gNB whose RSSI is smaller than a certain threshold, and then select a BWP for the terminal device whose RSSI is smallest from these BWPs for the transmission. In addition, a DL BWP may be selected and then a corresponding UL BWP may be acquired, or a UL BWP may be selected and then a corresponding DL BWP may be acquired.

In a stand-alone case, the gNB may perform the transmission each time on a fixed DL BWP. When the channel access rate is low, the gNB may notify the terminal device to switch the DL BWP during a next access. After the terminal device has switched the DL BWP, the gNB may perform the transmission on a new DL BWP. Identically, when the gNB fails to receive the uplink transmission from the terminal device for a long time period, the gNB may instruct the terminal device to switch the UL BWP. For a TDD band, the DL BWP and the UL BWP may be switched simultaneously.

The present disclosure further provides in some embodiments a terminal device. A principle of the terminal device for solving the problem is similar to that of the above-mentioned signal processing method, so the implementation of the terminal device may refer to that of the signal processing method and thus a repeated description thereof is omitted herein.

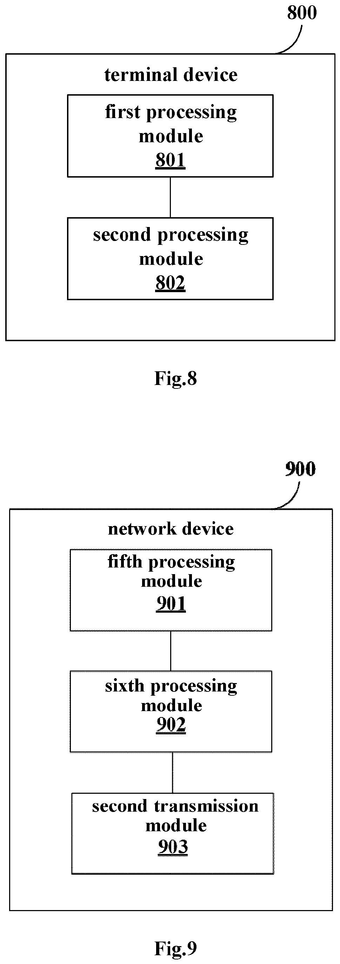

As shown in Fig.8, the present disclosure further provides in some embodiments a terminal device 800, which includes: a first processing module 801 configured to monitor a PDCCH on one or more first DL BWPs in an unlicensed band; and a second processing module 802 configured to acquire DL BWP-related information or UL BWP-related information from the PDCCH.

In the embodiments of the present disclosure, the DL BWP or UL BWP-related information may be used to directly determine a DL BWP for receiving data or an UL BWP for transmitting data, i.e., the DL BWP-related information for receiving the data or the UL BWP-related information for transmitting the data may explicitly indicate the DL BWP for receiving the data or the UL BWP for transmitting the data. Alternatively, the DL BWP-related information for receiving the data or the UL BWP-related information for transmitting the data may be used to indirectly determine the DL BWP for receiving the data or the UL BWP for transmitting the data, i.e., the DL BWP-related information for receiving the data or the UL BWP-related information for transmitting the data may implicitly indicate the DL BWP for receiving the data or the UL BWP for transmitting the data. For example, the DL BWP for receiving the data or the UL BWP for transmitting the data may be deduced in accordance with the DL BWP-related information for receiving the data or the UL BWP-related information for transmitting the data and a mapping relationship or a specific rule.

In a possible embodiment of the present disclosure, the terminal device 800 may further include: a third processing module configured to listen a channel on the corresponding one or more first UL BWPs in accordance with the UL BWP-related information to acquire a first listening result; a fourth processing module configured to, when the first listening result indicates that the one or more first UL BWPs include UL BWPs on which a transmission channel is idle, select at least one UL BWP from the UL BWPs on which the transmission channel is idle as active UL BWP; and a first transmission module configured to perform uplink transmission on the active UL BWP.

In a possible embodiment of the present disclosure, the second processing module 802 is further configured to acquire the DL BWP-related information or the UL BWP-related information from first indication information in the PDCCH, and the first indication information may indicate a UL BWP and/or a DL BWP.

The terminal device in the embodiments of the present disclosure may be used to execute the above-mentioned method embodiments with a similar implementation principle and a similar technical effect. A detailed description thereof is omitted in this embodiment.

The present disclosure further provides in some embodiments a network device. A principle of the network device for solving the problem is similar to that of the above-mentioned signal processing method, so the implementation of the network device may refer to that of the signal processing method and thus a repeated description thereof is omitted herein.

As shown in Fig.9, the present disclosure further provides in some embodiments a network device 900, which includes: a fifth processing module 901 configured to listen a channel on one or more first DL BWPs in an unlicensed band to acquire a second channel listening result, the one or more first DL BWPs being monitored by a terminal device; a sixth processing module 902 configured to, when the second channel listening result indicates that the one or more first DL BWPs include DL BWPs on which a transmission channel is idle, select at least one DL BWP from the DL BWPs on which the transmission channel is idle as an active DL BWP; and a second transmission module 903 configured to transmit control information carried on a PDCCH to the terminal device on the active DL BWP.

The network device in the embodiments of the present disclosure may be used to execute the above-mentioned method embodiments with a similar implementation principle and a similar technical effect. A detailed description thereof is omitted in this embodiment.

The present disclosure further provides in some embodiments a terminal device. A principle of the terminal device for solving the problem is similar to that of the above-mentioned signal processing method, so the implementation of the terminal device may refer to that of the signal processing method and thus a repeated description thereof is omitted herein.

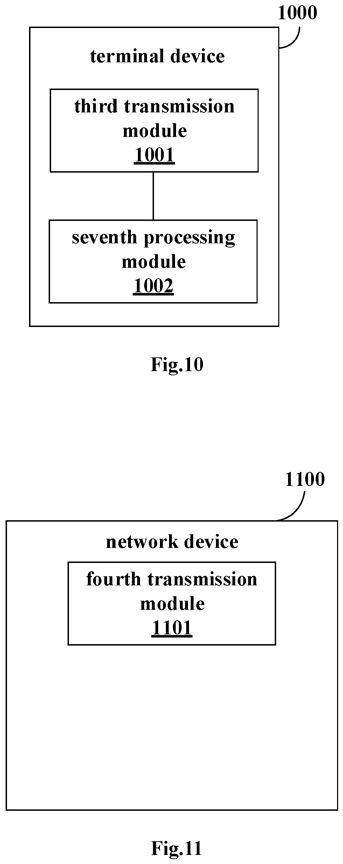

As shown in Fig.10, the present disclosure further provides in some embodiments a terminal device 1000, which includes: a third transmission module 1001 configured to receive control information carried on a PDCCH for a primary cell; and a seventh processing module 1002 configured to acquire second indication information from the control information carried on the PDCCH. The second indication information may explicitly or implicitly indicate UL BWP-related information and/or DL BWP-related information for the terminal device in one or more secondary cells.

For example, the primary cell may operate at a licensed band, and the secondary cell may operate at an unlicensed band.

The terminal device in the embodiments of the present disclosure may be used to execute the above-mentioned method embodiments with a similar implementation principle and a similar technical effect. A detailed description thereof is omitted in this embodiment.

The present disclosure further provides in some embodiments a network device. A principle of the network device for solving the problem is similar to that of the above-mentioned signal processing method, so the implementation of the network device may refer to that of the signal processing method and thus a repeated description thereof is omitted herein.

As shown in Fig. 11, the present disclosure further provides in some embodiments a network device 1100, which includes a fourth transmission module 1101 configured to transmit control information carried on a PDCCH for a primary cell to a terminal device. The control information carried on the PDCCH may include second indication information, and the second indication information may explicitly or implicitly indicate UL BWP-related information and/or DL BWP-related information for the terminal device in one or more secondary cells.

For example, the primary cell may operate at a licensed band, and the secondary cell may operate at an unlicensed band.

The network device in the embodiments of the present disclosure may be used to execute the above-mentioned method embodiments with a similar implementation principle and a similar technical effect. A detailed description thereof is omitted in this embodiment.

The present disclosure further provides in some embodiments a terminal device. A principle of the terminal device for solving the problem is similar to that of the above-mentioned signal processing method, so the implementation of the terminal device may refer to that of the signal processing method and thus a repeated description thereof is omitted herein.

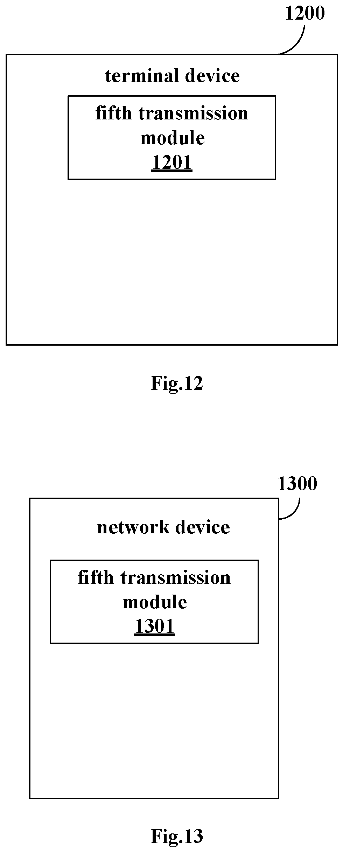

As shown in Fig. 12, the present disclosure further provides in some embodiments a terminal device 1200, which includes a fifth transmission module 1201 configured to receive control information carried on a group common PDCCH from a network device. The control information carried on the group common PDCCH may explicitly or implicitly notify the terminal device to perform UL BWP and/or DL BWP switching.

In a possible embodiment of the present disclosure, the control information carried on the group common PDCCH may explicitly or implicitly notify the terminal device to perform the UL BWP and/or DL BWP switching in accordance with a switching rule. The switching rule may include at least one of: performing the DL BWP and/or UL BWP switching in accordance with an identity of a BWP; performing the DL BWP and/or UL BWP switching in accordance with an RSSI for the terminal device on a UL BWP and an RSSI for the network device on a DL BWP; and performing the DL BWP and/or UL BWP switching in accordance with a channel access rate of the terminal device on the UL BWP and a channel access rate of the network device on the DL BWP.

In a possible embodiment of the present disclosure, the switching rule may be pre-agreed by the terminal device and the network device, or predefined in a protocol.

The terminal device in the embodiments of the present disclosure may be used to execute the above-mentioned method embodiments with a similar implementation principle and a similar technical effect. A detailed description thereof is omitted in this embodiment.

The present disclosure further provides in some embodiments a network device. A principle of the network device for solving the problem is similar to that of the above-mentioned signal processing method, so the implementation of the network device may refer to that of the signal processing method and thus a repeated description thereof is omitted herein.

As shown in Fig. 13, the present disclosure further provides in some embodiments a network device 1300, which includes a sixth transmission module 1301 configured to transmit control information carried on a group common PDCCH (GC-PDCCH) to a terminal device. The control information carried on the group common PDCCH may explicitly or implicitly notify the terminal device to perform UL BWP and/or DL BWP switching.

In a possible embodiment of the present disclosure, the control information carried on the group common PDCCH may explicitly or implicitly notify the terminal device to perform the UL BWP and/or DL BWP switching in accordance with a switching rule. The switching rule may include at least one of: performing the DL BWP and/or UL BWP switching in accordance with an identity of a BWP; performing the DL BWP and/or UL BWP switching in accordance with an RSSI for the terminal device on a UL BWP and an RSSI for the network device on a DL BWP; and performing the DL BWP and/or UL BWP switching in accordance with a channel access rate of the terminal device on the UL BWP and a channel access rate of the network device on the DL BWP.

In a possible embodiment of the present disclosure, the switching rule may be pre-agreed by the terminal device and the network device, or predefined in a protocol.

The network device in the embodiments of the present disclosure may be used to execute the above-mentioned method embodiments with a similar implementation principle and a similar technical effect. A detailed description thereof is omitted in this embodiment.

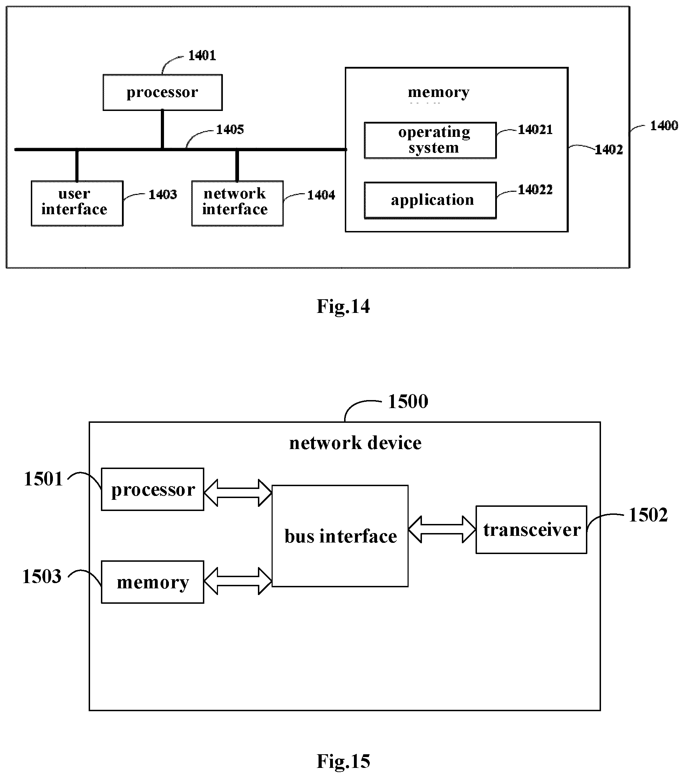

As shown in Fig.14, the present disclosure further provides in some embodiments a terminal device 1400, which includes at least one processor 1401, a memory 1402, at least one network interface 1404 and a user interface 1403. The components of the terminal device 1400 may be coupled together through a bus system 1405. It should be appreciated that, the bus system 1405 is configured to achieve connection and communication among the components. Apart from a data bus, the bus system 1405 may further include a power source bus, a control bus and a state signal bus. For clarification, all these buses in Fig.6 may be collectively called as bus system 1405.

The user interface 1403 may include a display, a keyboard or a pointing device (e.g., mouse, trackball (trackball), touch plate or touch panel).

It may be understood that the memory 1402 in the embodiment of the present disclosure may be a volatile memory or a nonvolatile memory, or may include both a volatile memory and a nonvolatile memory. The nonvolatile memory may be a read-only memory (Read-Only Memory, ROM), a programmable ROM (Programmable ROM, PROM), an erasable programmable PROM (Erasable PROM, EPROM), an electrically EPROM (Electrically EPROM, EEPROM) or a flash memory. The volatile memory may be a random access memory (Random Access Memory, RAM), which is used as an external cache. By way of example rather than limitation, many forms of RAMs such as a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synchlink DRAM (Synchlink DRAM, SLDRAM), and a direct Rambus RAM (Direct Rambus RAM, DRRAM) may be used. The memory 1402 in the system and method described in embodiments of the present disclosure is intended to include, but is not limited to, these and any other appropriate types of memories.

In some embodiments of the present disclosure, the following elements may be stored in the memory 1402: an executable module or data structure, or a subset thereof, or an extended set thereof: an operating system 14021 and an application 14022.

The operating system 14021 includes various system programs, such as a framework layer program, a core library layer program, and a driver layer program, to implement various basic services and process a hardware-based task. The application 14022 includes various applications such as a media player (Media Player) or a browser (Browser), to implement various application services. A program for implementing the method provided in embodiments of the present disclosure may be included in the application 14022.

In some embodiments of the present disclosure, a program or instruction stored in the memory 1402, e.g., a program or instruction stored in the application 14022, may be called so as to: monitor a PDCCH on one or more first DL BWPs in an unlicensed band; and acquire DL BWP-related information or UL BWP-related information from the PDCCH.

In some embodiments of the present disclosure, the program or instruction stored in the memory 1402, e.g., the program or instruction stored in the application 14022, may be called so as to: receive control information carried on a PDCCH for a primary cell; and acquire second indication information from the control information carried on the PDCCH, the second indication information indicating UL BWP-related information and/or DL BWP-related information for the terminal device in one or more secondary cells.

In some embodiments of the present disclosure, the program or instruction stored in the memory 1402, e.g., the program or instruction stored in the application 14022, may be called, so as to receive control information carried on a group common PDCCH from a network device. The control information carried on the group common PDCCH may explicitly or implicitly notify the terminal device to perform UL BWP and/or DL BWP switching.

The terminal device in the embodiments of the present disclosure may be used to execute the above-mentioned method embodiments with a similar implementation principle and a similar technical effect. A detailed description thereof is omitted in this embodiment.

Fig.15 shows an applicable network device according to an embodiment of the present disclosure. As shown in Fig.15, the network device 1500 includes a processor 1501, a transceiver 1502, a memory 1503 and a bus interface.

In some embodiments of the present disclosure, the network device 1500 may further include a computer program stored in the memory 1503 and executed by the processor 1501. The computer program is executed by the processor 1501, so as to: listen a channel on one or more first DL BWPs in an unlicensed band to acquire a second channel listening result, the one or more first DL BWPs being monitored by a terminal device; when the second channel listening result indicates that the one or more first DL BWPs include DL BWPs on which a transmission channel is idle, select at least one DL BWP from the DL BWPs on which the transmission channel is idle as an active DL BWP; and transmit control information carried on a PDCCH to the terminal device on the active DL BWP.

In some embodiments of the present disclosure, the network device 1500 may further include a computer program stored in the memory 1503 and executed by the processor 1501. The computer program is executed by the processor 1501, so as to transmit control information carried on a PDCCH for a primary cell to a terminal device. The control information carried on the PDCCH may include second indication information, and the second indication information may explicitly or implicitly indicate UL BWP-related information and/or DL BWP-related information for the terminal device in one or more secondary cells.

In some embodiments of the present disclosure, the network device 1500 may further include a computer program stored in the memory 1503 and executed by the processor 1501. The computer program is executed by the processor 1501, so as to transmit control information carried on a group common PDCCH to a terminal device. The control information carried on the group common PDCCH may explicitly or implicitly notify the terminal device to perform UL BWP and/or DL BWP switching.

In Fig. 15, a bus architecture may include any quantity of interconnected buses and bridges, and connects various circuits including one or more processors represented by the processor 1501 and a memory represented by the memory 1503. The bus architecture may also connect various other circuits such as peripherals, voltage regulators and power management circuits, which is well known in the art. Therefore, a detailed description thereof is omitted herein. The bus interface provides interfaces. The transceiver 1502 may be multiple elements, such as a transmitter and a receiver, to provide units for communicating with various other apparatuses on the transmission medium.

The processor 1501 is responsible for supervising the bus architecture and normal operation and the memory 1503 may store the data being used by the processor 1501 during operation.

The network device in the embodiments of the present disclosure may be used to execute the above-mentioned method embodiments with a similar implementation principle and a similar technical effect. A detailed description thereof is omitted in this embodiment.

Steps of the method or algorithm described in this disclosure may be implemented in form of hardware, or in form of software instructions executable by a processor. The software instructions may be composed of corresponding software modules, and the software modules may be stored in an RAM, flash memory, ROM, EPROM, EEPROM, register, hard disk, removable hard disk, read-only optic disc or any other form of storage medium well known in the art. An exemplary storage medium is coupled to a processor, so that the processor may read information from the storage medium and write information to the storage medium. Certainly, the storage medium may be a part of the processor. The processor and the storage medium may reside in an ASIC. Further, the ASIC may reside in a core network interface device. Certainly, the processor and the storage medium may reside in the core network interface device as discrete components.

It is understood by a person skilled in the art that, in one or more of foregoing examples, the functions described in the present disclosure may be implemented by hardware, software, firmware or a combination thereof. When implemented in software, the functions may be stored in a computer readable medium, or transmitted as one or more instructions or codes on a computer readable medium. The computer readable medium includes a computer storage medium and a communication medium, wherein the communication medium includes any medium suitable for transporting a computer program from one place to another. The storage medium may be any available medium accessible by a general purpose or dedicated computer.

The objectives, technical solutions and beneficial effects of the present disclosure are described in detail above with respect to specific implementations. It is understood, the foregoing description merely illustrate specific implementations of the present disclosure, but the scope of the disclosure is by no means limited thereto. Any modification, equivalent replacement, improvement made on the basis of the technical solution of the present disclosure shall fall within the scope of the present disclosure.

It is appreciated by a person skilled in the art that, embodiments of the present disclosure may be implemented as a method, system or computer program product. Therefore, embodiments of the present disclosure may take the form of a complete hardware embodiment, complete software embodiment or combination of hardware and software. Moreover, embodiments of the present disclosure may take the form of a computer program product embodied as one or more computer usable storage media (including, but not limited to, a magnetic disk storage, CD-ROM, optical storage or the like) storing therein computer usable program codes.

The embodiments of the present disclosure have been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, dedicated computer, embedded processor, or other programmable data processing device to produce a machine, such that the instructions, when executed via the processor of the computer or other programmable data processing device, create means for implementing the functions specified in one or more flows of the flow diagram and/or one or more blocks of the block diagram.

These computer program instructions may also be stored in a computer-readable storage that can direct a computer or other programmable data processing terminal device to function in a particular manner, such that the instructions stored in the computer-readable storage produce an article of manufacture including instruction means which implement the function specified in one or more flows of the flow diagram and/or one or more blocks of the block diagram.

The computer program instructions may also be loaded to a computer or other programmable data processing device to cause a series of operational steps to be performed on the computer or other programmable terminal device, to produce a computer-implemented process, such that the instructions which are executed on the computer or other programmable device provide steps for implementing the functions specified in one or more flows of the flow diagram and/or one or more blocks of the block diagram.

Apparently, a person skilled in the art may make various modifications and variants to the embodiments of the present disclosure without departing from the spirit and scope of the present disclosure. In case that these modifications and variants to the embodiments of the present disclosure fall within the scope of the claims of the present disclosure and its equivalents, these modifications and variants are also intended to be encompassed in the present disclosure.

## Claims

1. A signal processing method for a terminal device, comprising:
monitoring a physical downlink control channel (PDCCH) on one or more first downlink (DL) bandwidth parts (BWPs) in an unlicensed band; and
acquiring DL BWP-related information or uplink (UL) BWP-related information from the PDCCH.

2. The signal processing method according to claim 1, further comprising:
listening a channel on the corresponding one or more first UL BWPs in accordance with the UL BWP-related information to acquire a first listening result;
when the first listening result indicates that the one or more first UL BWPs comprise a UL BWP on which a transmission channel is idle, selecting at least one UL BWP from the UL BWPs on which the transmission channel is idle as active UL BWP;
performing uplink transmission on the active UL BWP.

3. The signal processing method according to claim 1, wherein the acquiring the DL BWP-related information or the UL BWP-related information from the PDCCH comprises:
acquiring the DL BWP-related information or the UL BWP-related information from first indication information in the PDCCH, wherein the first indication information indicates the UL BWP and/or the DL BWP.

4. A signal processing method for a network device, comprising:
listening a channel on one or more first DL BWPs in an unlicensed band to acquire a second channel listening result, wherein the one or more first DL BWPs are monitored by a terminal device;
when the second channel listening result indicates that the one or more first DL BWPs comprise a DL BWP on which a transmission channel is idle, selecting at least one DL BWP from the DL BWPs on which the transmission channel is idle as active DL BWP for the terminal device;
transmitting control information carried on a PDCCH to the terminal device on the active DL BWP.

5. A signal processing method for a terminal device, comprising:
receiving control information carried on a PDCCH for a primary cell; and
acquiring second indication information from the control information carried on the PDCCH, wherein the second indication information indicates UL BWP-related information and/or DL BWP-related information for the terminal device in one or more secondary cells.

6. The signal processing method according to claim 5, wherein the primary cell operates at a licensed band, and the secondary cell operates at an unlicensed band.

7. A signal processing method for a network device, comprising:
transmitting control information carried on a PDCCH for a primary cell to a terminal device, wherein the control information carried on the PDCCH comprises second indication information, the second indication information indicates UL BWP-related information and/or DL BWP-related information for the terminal device in one or more secondary cells.

8. The signal processing method according to claim 7, wherein the primary cell operates at a licensed band, and the secondary cell operates at an unlicensed band.

9. A signal processing method for a terminal device, comprising:
receiving control information carried on a group common PDCCH from a network device, wherein the control information carried on the group common PDCCH notifies the terminal device to perform UL BWP and/or DL BWP switching.

10. The signal processing method according to claim 9, wherein the control information carried on the group common PDCCH notifies the terminal device to perform the UL BWP and/or DL BWP switching in accordance with a switching rule, wherein the switching rule comprises at least one of:
performing the DL BWP and/or UL BWP switching in accordance with an identity of a BWP;
performing the DL BWP and/or UL BWP switching in accordance with a received signal strength indicator (RSSI) for the terminal device on a UL BWP and an RSSI for the network device on a DL BWP; and
performing the DL BWP and/or UL BWP switching in accordance with a channel access rate of the terminal device on the UL BWP and a channel access rate of the network device on the DL BWP.

11. The signal processing method according to claim 10, wherein the switching rule is pre-agreed by the terminal device and the network device, or predefined in a protocol.

12. A signal processing method for a network device, comprising:
transmitting control information carried on a group common PDCCH to a terminal device, wherein the control information carried on the group common PDCCH notifies the terminal device to perform UL BWP and/or DL BWP switching.

13. The signal processing method according to claim 12, wherein the group common PDCCH notifies the terminal device to perform the UL BWP and/or DL BWP switching in accordance with a switching rule, wherein the switching rule comprises at least one of:
performing the DL BWP and/or UL BWP switching in accordance with an identity of a BWP;
performing the DL BWP and/or UL BWP switching in accordance with an RSSI for the terminal device on a UL BWP and an RSSI for the network device on a DL BWP; and
performing the DL BWP and/or UL BWP switching in accordance with a channel access rate of the terminal device on the UL BWP and a channel access rate of the network device on the DL BWP.

14. The signal processing method according to claim 13, wherein the switching rule is pre-agreed by the terminal device and the network device, or predefined in a protocol.

15. A terminal device, comprising:
a first processing module configured to monitor a physical downlink control channel (PDCCH) on one or more first downlink (DL) bandwidth parts (BWPs) in an unlicensed band; and
a second processing module configured to acquire DL BWP-related information or UL BWP-related information from the PDCCH.

16. A network device, comprising:
a fifth processing module configured to listen a channel on one or more first DL BWPs in an unlicensed band to acquire a second channel listening result, wherein the one or more first DL BWPs are monitored by a terminal device;
a sixth processing module configured to, when the second channel listening result indicates that the one or more first DL BWPs comprise a DL BWP on which a transmission channel is idle, select at least one DL BWP from the DL BWPs on which the transmission channel is idle as active DL BWP for the terminal device; and
a second transmission module configured to transmit control information carried on a PDCCH to the terminal device on the active DL BWP.

17. A terminal device, comprising:
a third transmission module configured to receive control information carried on a PDCCH for a primary cell; and
a seventh processing module configured to acquire second indication information from the control information carried on the PDCCH, wherein the second indication information indicates UL BWP-related information and/or DL BWP-related information for the terminal device in one or more secondary cells.

18. A network device, comprising:
a fourth transmission module configured to transmit control information carried on a PDCCH for a primary cell to a terminal device, wherein the control information carried on the PDCCH comprises second indication information, the second indication information indicates UL BWP-related information and/or DL BWP-related information for the terminal device in one or more secondary cells.

19. A terminal device, comprising:
a fifth transmission module configured to receive control information carried on a group common PDCCH from a network device, wherein the control information carried on the group common PDCCH notifies the terminal device to perform UL BWP and/or DL BWP switching.

20. A network device, comprising:
a sixth transmission module configured to transmit control information carried on a group common PDCCH to a terminal device, wherein the control information carried on the group common PDCCH notifies the terminal device to perform UL BWP and/or DL BWP switching.

21. A terminal device, comprising a processor, a memory, and a computer program stored in the memory and capable of being executed by the processor, wherein the processor is configured to execute the computer program to implement the steps in the signal processing method according to any one of claims 1 to 3, or the steps in the signal processing method according to claim 5 or 6, or the steps in the signal processing method according to any one of claims 9 to 11.

22. A network device, comprising a processor, a memory, and a computer program stored in the memory and capable of being executed by the processor, wherein the processor is configured to execute the computer program to implement the steps in the signal processing method according to claim 4, or the steps in the signal processing method according to claim 7 or 8, or the steps in the signal processing method according to any one of claims 12 to 14.

23. A computer-readable storage medium storing therein a computer program, wherein the computer program is executed by a processor, to implement the steps in the signal processing method according to any one of claims 1 to 3, the steps in the signal processing method according to claim 4, the steps in the signal processing method according to claim 5 or 6, the steps in the signal processing method according to claim 7 or 8, the steps in the signal processing method according to any one of claims 9 to 11, or the steps in the signal processing method according to any one of claims 12 to 14.
